(19) **Europäisches Patentamt**

**European Patent Office**

**Office européen des brevets**

(11) **EP 0 706 103 B1**

(12) **EUROPÄISCHE PATENTSCHRIFT**

(45) Veröffentlichungstag und Bekanntmachung des Hinweises auf die Patenterteilung:
**24.11.1999 Patentblatt 1999/47**

(51) Int Cl.$^6$: **G05B 19/41**, G05B 19/4099

(21) Anmeldenummer: **95115094.5**

(22) Anmeldetag: **25.09.1995**

(54) **Verfahren und Vorrichtung zur numerischen Bahnsteuerung von Werkzeugmaschinen oder Robotern**

Method and device for numerical control of path for machine-tools or robots

Méthode et dispositif de commande numérique de trajet pour machines-outil ou robots

(84) Benannte Vertragsstaaten:
**AT CH DE ES FR GB IT LI SE**

(30) Priorität: **06.10.1994 DE 4435793**

(43) Veröffentlichungstag der Anmeldung:
**10.04.1996 Patentblatt 1996/15**

(73) Patentinhaber: **SIEMENS AKTIENGESELLSCHAFT**
**80333 München (DE)**

(72) Erfinder:
- **Hilpert, Bernhard, Dipl.-Ing. (FH)**
  **D-71636 Ludwigsburg (DE)**
- **Kreidler, Volker, Dipl.-Ing.**
  **D-72070 Tübingen (DE)**
- **Schneider, Dieter**
  **D-71522 Backnang (DE)**
- **Späth, Wolfgang, Dr.**
  **D-71723 Grossbottwar (DE)**

(56) Entgegenhaltungen:
EP-A- 0 314 335     US-A- 5 227 978
US-A- 5 282 143     US-A- 5 317 682

- **IEEE COMPUTER GRAPHICS AND APPLICATIONS, Bd. 11, Nr. 1, Januar 1991 LOS ALAMITOS, CA., USA, Seiten 55-71, XP 000179582 PIEGL LES 'ON NURBS: A SURVEY'**
- **VISUAL COMPUTER, INTERNATIONAL JOURNAL OF COMPUTER GRAPHICS, MARCH 1992, GERMANY, Bd. 8, Nr. 3, ISSN 0178-2789, Seiten 149-161, XP 000561661 ANANTAKRISHNAN N. & PIEGL L.A. 'Integer subdivision algorithm for rendering NURBS curves'**

EP 0 706 103 B1

**Beschreibung**

Die Erfindung bezieht sich zum einen auf ein Verfahren zur numerischen Bahnsteuerung von Werkzeugmaschinen oder Robotern, das eine durch mehrere Bewegungsachsen bestimmbare Relativbewegung zwischen Werkzeug und Werkstück ermöglicht, wobei die Bahn der Bewegung durch Interpolation zwischen vorgegebenen Bahnpunkten bestimmbar ist, zum anderen bezieht sich die Erfindung auf eine Vorrichtung zur Durchführung des Verfahrens.

Bei handelsüblichen Werkzeugmaschinensteuerungen sind die verschiedensten Formen von Interpolationen gebräuchlich, um die angestrebte Relativbewegung auszulosen. So werden lineare Bewegungsbahnen durch Linearinterpolationen, kreisförmige Bewegungsbahnen durch Kreisinterpolationen usw. realisiert. Wünschenswert ist jedoch ein für alle Bahnkurven einheitliches Interpolationsverfahren, damit Interpolationsverfahrenswechsel, die natürlich Übergangsprobleme nach sich ziehen, vermieden werden. Ein einheitliches Interpolationsverfahren ermöglicht es nämlich auch, komplexe Bewegungsabläufe in einem durchgängigen System zur Steuerung von Werkzeugmaschinen oder Robotern zu verarbeiten.

Die Erfinder haben in diesem Zusammenhang erkannt, daß bei heutigen Systemen insbesondere die Konturen für zu bearbeitende Werkstücke häufig an CAD/CAM-Arbeitsplätzen vorgeformt werden und dann erst in weiteren Schritten aus diesen Informationen die eigentlichen Steuerungsfunktionen für die Werkzeugmaschine oder den Roboter abgeleitet werden. Dabei wird dann meist mit Postprozessoren gearbeitet, welche die am CAD/CAM-Arbeitsplatz erstellten Konturen in von den heutigen numerischen Steuerungen verarbeitbare Teilstücke zerlegen.

Aufgabe der Erfindung ist es, ein Verfahren der eingangs genannten Art so auszubilden, daß eine durchgängige Möglichkeit geschaffen wird, in einem CAD/CAM-System vorliegende Information direkt in eine numerische Steuerung für Werkzeugmaschinen oder Roboter einzuspeisen. In diesem Zusammenhang ist jedoch darauf zu verweisen, daß es prinzipiell auch möglich ist, derartige Informationen in der Steuerung überhaupt erst zu generieren. Auch in diesem Zusammenhang wird die Durchgängigkeit zwischen den CAD/CAM-typischen Daten bis zu eigentlichen Achssteuerung gewährleistet. Ferner gehört zur Aufgabe auch die Schaffung einer Vorrichtung zur Durchführung des Verfahrens.

Gemäß der Erfindung wird diese Aufgabe für ein Verfahren der eingangs genannten Art durch die folgenden Verfahrensschritte gelöst:

1.1 die Information über die zu generierende Bahn wird werkstückkoordinatensystembezogen einer Quelle in Form von NURBS, also Nicht-Uniforme-Rationale-Basis-Splines, oder rationalen Polynomen entnommen,

1.2 in der numerischen Steuerung werden diese NURBS in rationale Polynome gewandelt bzw. diese bereits vorliegenden rationalen Polynome direkt akzeptiert,

1.3 diese gewandelten bzw. akzeptierten rationalen Polynome werden unter bedarfsweiser Berücksichtigung von Korrekturgrößen, insbesondere Werkzeugkorrekturen, analytisch in ein Basiskoordinatensystem transformiert, bei dem die Bahn daraufhin als Kurve in Form von transformierten Polynomen im Raum vorliegt,

1.4 es erfolgt eine Interpolation dieser transformierten Polynome nach einem einheitlichen Interpolationsverfahren,

1.5 das interpolierte Signal wird in das Maschinenkoordinatensystem transformiert und auf die einzelnen Maschinenachsen aufgeteilt und den zugeordneten Antrieben zugeführt.

Gerade die Verwendung von rationalen Polynomen ermöglicht eine leichte und äußerst schnelle Datenverarbeitung, weil dabei analytische Bearbeitungsvorschriften zum Tragen kommen. Wegen des einheitlichen Interpolationsverfahrens ist im übrigen auch eine Zweistufigkeit mit Grob- und Feininterpolation ebenfalls nicht erforderlich.

Eine erste vorteilhafte Ausbildung des erfindungsgemäßen Verfahrens nimmt Bezug auf die direkte Verwendung der CAD/CAM-Systemdaten, wie diese bei heutzutage gebräuchlichen CAD/CAM-Arbeitsplätzen anfallen.

Relativ einfach läßt sich die Verarbeitung der Informationen dadurch ermöglichen, das Werkstückkoordinatensystem und das Basiskoordinatensystem zusammenfallen. Ferner ist es auch vereinfachend möglich, daß das Basiskoordinatensystem und das Maschinenkoordinatensystem zusammenfallen.

Um relativ einfach eine Geschwindigkeitssteuerung längs der Bahn zu realisieren, ist es möglich, daß die Interpolationsweite proportional der Geschwindigkeit längs der Bahn ist.

Ferner ist eine weitere vorteilhafte Ausbildung der Erfindung dadurch gekennzeichnet, daß die Quelle innerhalb der numerischen Steuerung angeordnet ist, weil damit auf gesonderte CAD/CAM-Arbeitsplätze vollständig verzichtet werden kann.

Eine weitere Ausbildung der Erfindung ist dadurch gekennzeichnet, daß alle Verarbeitungsschritte weitestgehend in Echtzeit während der Bearbeitung des Werkstückes durchgeführt wird. Damit ist eine höchste Geschwindigkeit und dennoch eine hohe Konturgüte der Bahnsteuerung möglich.

Eine vereinfachende Verarbeitung der Informationen ist dadurch möglich, daß NURBS oder rationale Polynome ersten, zweiten oder dritten Grades akzeptiert werden.

Eine Vorrichtung zur Realisierung des obengenannten Verfahrens ergibt sich als eine Vorrichtung zur numerischen Bahnsteuerung von Werkzeugmaschinen oder Robotern, die eine durch mehrere Bewegungsachsen bestimmbare Relativbewegung zwischen Werkzeug und Werkstück ermöglicht, wobei die Bahn der Bewegung durch Interpolation zwischen vorgegebenen Bahnpunkten bestimmbar ist, mit den folgenden Merkmalen:

9.1 die Information über die zu generierende Bahn ist werkstückkoordinatensystembezogen einer Quelle in Form von NURBS, also Nicht-Uniforme-Rationale-Basis-Splines, oder rationalen Polynomen entnehmbar,

9.2 in der numerischen Steuerung sind diese NURBS in rationale Polynome wandelbar bzw. diese bereits vorliegenden rationalen Polynome direkt akzeptierbar,

9.3 diese wandelbaren bzw. akzeptierbaren rationalen Polynome sind unter bedarfsweiser Berücksichtigung von Korrekturgrößen, insbesondere Werkzeugkorrekturen, analytisch in ein Basiskoordinatensystem transformierbar, bei dem die Bahn daraufhin als Kurve in Form von transformierten Polynomen im Raum vorliegt,

9.4 es ist in der numerischen Steuerung eine Einrichtung zur Interpolation dieser transformierten Polynome nach einem einheitlichen Interpolationsverfahren vorgesehen,

9.5 das interpolierte Signal ist in das Maschinenkoordinatensystem transformierbar und auf die einzelnen Maschinenachsen aufteilbar und den zugeordneten Antrieben zuführbar.

In diesem Zusammenhang ergibt sich eine äußerst einfache Ausgestaltung der Vorrichtung dadurch, daß die Interpolationseinrichtung in den Kern der numerischen Steuerung integriert ist.

Ein Ausführungsbeispiel der Erfindung ist in der Zeichnung dargestellt und wird im folgenden näher erläutert. Dabei zeigen:

FIG 1     ein Blockschaltbild für die erfindungsgemäße Vorrichtung und
FIG 2     die Realisierung eines Kurvenverlaufs mit dem Verfahren nach der Erfindung.

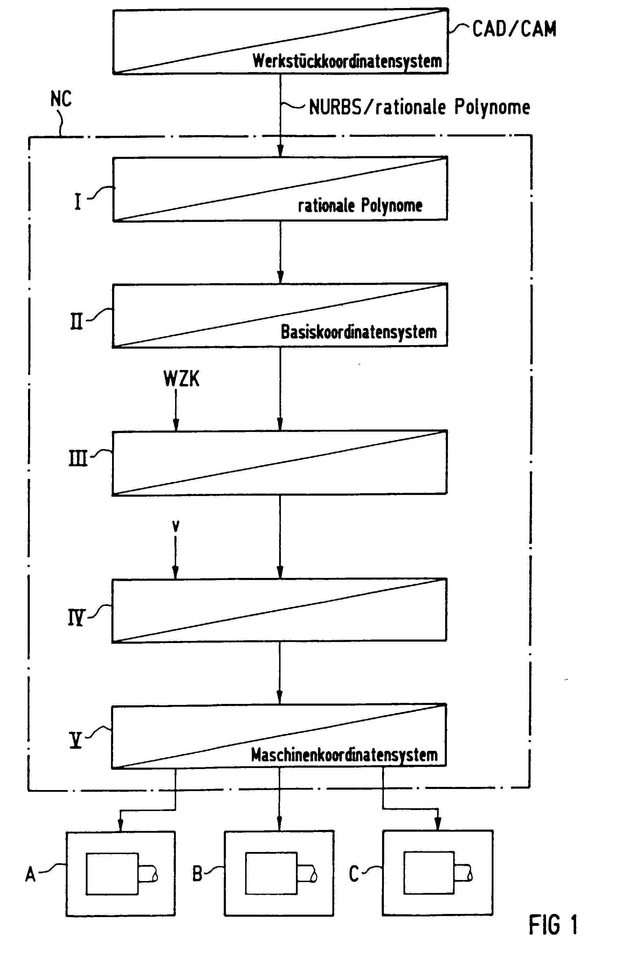

In der Darstellung gemäß FIG 1 ist in Form eines Blockschaltbildes gezeigt, wie von einem CAD/CAM-System Daten in Form von NURBS bzw. rationalen Polynomen ausgegeben werden, die in einem Werkstückkoordinatensystem Angaben über die Kontur eines zu erstellenden Werkstückes beinhalten. Die Konturerstellung mittels einer numerischen Steuerung für eine Werkzeugmaschine ist als besonders anschauliches Beispiel angegeben. Selbstverständlich wäre die Erfindung auch auf eine Robotersteuerung anwendbar, bei der eine Roboterbewegung zu steuern wäre. Bei derartigen Systemen ist dann allerdings eine vielachsige Bewegungssteuerung erforderlich, bei der insbesondere auch ganz definierte Orientierungen einzuhalten sind. Daher zurück zum Beispiel der Werkzeugmaschinensteuerung.

Diese Informationen vom CAD/CAM-System gelangen, wie durch einen Pfeil angedeutet, wobei auch im folgenden Signalflüsse durch Pfeile angedeutet sind, in eine gestrichelt hervorgehobene numerische Steuerung NC. In dieser werden zunächst in einer ersten Stufe I die eingehenden Signale dahingehend geprüft, ob es sich um NURBS-Signale oder rationalen Polynomen entsprechende Signale handelt. Selbstverständlich wäre es auch möglich, anstelle dieser Signale auch andere Konturinformationen beinhaltende Signale in der Stufe I aufzunehmen. Auch die Aufnahme rudimentärer, nach Ergänzugsvorschriften zu behandelnder Konturinformationen wäre denkbar. Wesentlich für die Eingangsstufe I ist aber, daß dabei ausgangsseitig stets rationale Polynome vorliegen. D.h. für die erstgenannten NURBS, daß diese in rationale Polynome nach einen im folgenden noch näher geschilderten analytischen schnellen Verfahren gewandelt werden bzw. daß bereits als rationale Polynome vorliegende Eingangsgrößen direkt durch die Eingangsstufe I durchgeschaltet werden.

Die Ausgangssignale der Stufe I gelangen dann an eine Stufe II, die als Transformationsstufe eine Wandlung in ein Basiskoordinatensystem vornimmt. Ein derartiges Basiskoordinatensystem ist nicht allein auf die bloße Werkstückkontur bezogen, sondern kann beispielsweise bezüglich der Koordinierung mit der jeweiligen Werkzeugmaschine anwendungsbezogen zugeschnitten sein.

In einer weiteren nachgeschalteten Stufe III werden die Ausgangssignale der Stufe II bedarfsweise mit Werkzeugkorrekturwerten beaufschlagt, so daß am Ausgang der Stufe III nunmehr Polynome vorliegen, die beispielsweise als drei Polynome im kartesischen Raum die anzustrebende räumliche Bewegungsbahn definieren.

Die Ausgangssignale der Stufe III gelangen im weiteren an eine Stufe IV, in der die eigentliche durchgängige Interpolation der einheitlich generierten Raumkurven einstufig erfolgt. Die Interpolation kann dabei bezüglich der Interpolationsweite entsprechend der anstrebenden Bahngeschwindigkeit variiert werden. Dazu ist ein Referenzwert für die jeweilige Geschwindigkeit v in die Stufe IV einzuspeisen.

Das Ausgangssignal der für die Interpolations zuständigen Stufe IV gelangt dann an eine Stufe V, bei der aus der die Raumbewegung angebenden dreidimensionalen Interpolation die spezifischen Achssignale für die jeweiligen Antriebe der der Übersichtlichkeit halber im einzelnen nicht dargestellten Werkzeugmaschine, beispielsweise Antriebe A, B und C, gebildet werden. In diesem Zusammenhang kann auch eine Transformation vom Basiskoordinatensystem in ein Maschinenkoordinatensystem erfolgen.

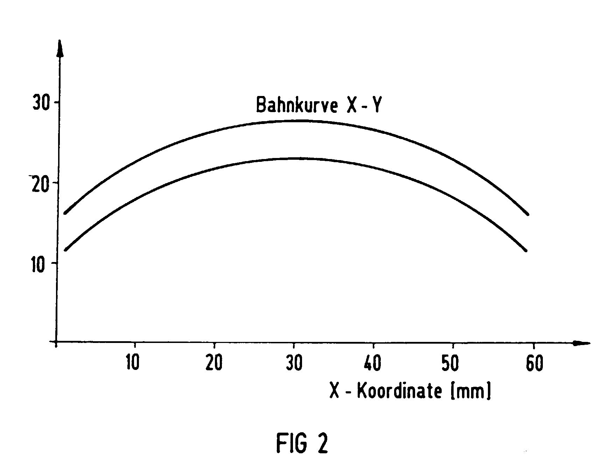

In der Darstellung gemäß FIG 2 ist ein Beispiel angegeben, wie für die Anwendungsfall, daß NURBS aus einem CAD/CAM-System entnommen werden, diese in die resultierenden Steuersignale für die Antriebe A, B bzw. C gewandelt werden.

NURBS werden u.a. beschrieben in den Veröffentlichungen: CAD/CAM aus Wissenschaft und Industrie 3/89, "Was sind NURBS ?", Ulrich Walter sowie IEEE Computer Graphics & Applications, "On NURBS: A Survey", Les Piegl.

Nun wieder zur FIG 2. Es sei zunächst der Einfachheit halber angenommen, das CAD-CAM-System habe eine ebene NURBS-Kurve 3. Ordnung (= 2.Grades) für die Achsen X und Y vorgegeben. Jeder Kurvenabschnitt wird dann durch 3 Kontrollpunkte $P_i=(X_i,Y_i)$, 3 den jeweiligen Punkten zugeordneten Gewichten $H_i$ und 5 Parameterwerten $u_i$ beschrieben. Die Gewichte kann man einfach wie die Positionen einer weiteren Achse H auffassen, welche die Rolle einer homogenen Koordinate spielt, d.h., die Positionen im normalen Raum erhält man aus den Positionen im homogenen Raum durch Division durch die homogene Koordinate: $X \to X/H$, $Y \to Y/H$. Die vorgegebenen Werte in Werkstückkoordinaten seien

$(X_1,Y_1,H_1) = (0,10,1)$, $(X_2,Y_2,H_2) = (30,50,0.4)$, $(X_3,Y_3,H_3) = (60,10,1)$ und
$u_1 = 0$, $u_2 = 0.1$, $u_3 = 0.2$, $u_4 = 1.2$, $u_5 = 1.3$.

Die Polynomdarstellung im Intervall $(u_3,u_4)$ dieser Kurve erhält man dann z.B. mit folgendem Algorithmus:

Wir berechnen uns die Hilfsgrößen $g_{i,j} = u_{i+3-j} - u_i$, mit $j = 1,2$ und $i = j+1$ , ...,3 und $a_i = u_3 - u_i$, $i = 1,2,3$.

Die Polynomkoeffizienten des Zählers der X-Achse berechnen sich dann durch folgende Rekursionen: Wir setzen $A_{i,0} = H_i * X_i$ und definieren $A_{i,j} = (A_{i,j-1} - A_{i-1,j-1})g_{i,j}$ . Diese Matrix wird bis zur Diagonalen berechnet:

$$
\begin{aligned}
A_{1,0} &= 1*0 &= 0 \\
A_{2,0} &= 0.4*30 &= 12 \qquad & A_{2,1} = (12-0)/(1.2-0.1) &= 10.9 \\
A_{3,0} &= 1*60 &= 60 \qquad & A_{3,1} = (60-12)/(1.3-0.3) &= 43.6 \\
\\
A_{3,2} &= (43.6-10.9)/(1.2-0.2) &= 32.7
\end{aligned}
$$

Von der so erhaltenen Diagonalen ausgehend berechnet man die fehlende Hälfte der Matrix mit der Rekursionformel $A_{i,j} = A_{i,j-1} + a_j * A_{i+1,j}$ :

$$
\begin{aligned}
A_{1,0} &= 0 & A_{1,1} &= 0+(0.2-0.1)*10.9=1.09 & A_{1,2} &=1.09+0*10.9 &=1.09 \\
& & A_{2,1} &= 10.0 & A_{2,2} &=10.9+0*32.7 &=10.9 \\
& & & & A_{3,2} & &=32.7
\end{aligned}
$$

Aus den in der rechten Spalte stehenden Zählen folgen die Polynomkoeffizienten des Zählers der X-Achse im Intervall $(u_3, u_4)$:

$$ ZX(u) = 1.09 + 2*10.9*(u-u_3) + 32.7*(u-u_3)^2. $$

Auf die gleiche Weise werden die Polynomkoeffizienten für die Y-Achse berechnet:

```
10                      10 + (0.2 - 0.1)*9.09 = 10.9
0.4*50=20               (20 - 10)/(1.2 - 0.1) = 9.09
10                      (10 - 20)/(1.3 - 0.2) = -9.09


10.9 + 0*9.09                       = 10.9
9.09 + 0*(-18.18)                   = 9.09
(-9.09 -9.09)/(1.2 - 0.2)           = -18.18,
```

also

$$ZY(u) = 10.9 + 2*9.09*(u - u_3) - 18.18*(u - u_3)^2 \; .$$

Für die homogene Koordinate ergibt das Rekursionschema:

```
1                      1 + (0.2 - 0.1)*(-0,54) = 0.94
0.4                    (0.4 - 1)/(1.2 - 0.1)   = -0.54
1                      (1 - 0.4)/(1.3 - 0.2)   = 0,54


0.94 + 0*(0.54)                     = 0.94
-0.54 + 0*1.09                      = -0.54
(0.54 + 0.54)/(1.2 - 0.2)          = 1.09,
```

also

$$H(u) = 0.94 - 2*0{,}54*(u - u_3) + 1.09*(u - u_3)^2 \; .$$

Nach Division durch die homogene Koordinate ergeben sich schließlich die rationalen Polynome für die beiden Achsen X und Y:

$$X(u) = (1.09 + 2*10.9*(u - u_3) + 32.7*(u - u_3^{*2})/(0.94 - 2*0.54* (u - u_3) + 1.09*(u - u_3)^2$$

und

$$Y(u) = (10.9 + 2*9.09*(u - u_3) - 18.18*(u - u_3)^2)/(0.94 - 2*0.54*(u - u_3) + 1.09*(u - u_3)^2).$$

Damit ist die Umwandlung der Splinekurve aus der NURBS-Darstellung des CAD-Systems (Beschreibung mittels Kontrollpunkten, Gewichten und Parameterwerten) in die für die numerische Steuerung besser geeignete Form der rationalen Polynomkurve abgeschlossen. Da dieser Vorgang in Echtzeit stattfindet, können Korrekturen aller Art direkt durch die numerische Steuerung vorgenommen werden. So könnte zum Beispiel eine Werkzeuglänge vom Bediener angegeben oder durch einen Meßzyklus automatisch bestimmt werden und direkt durch die Steuerung eingerechnet werden, ohne daß ein neues Programm generiert werden muß.

Wenn beispielsweise das Werkzeug oder die Aufspannung des Werkstücks eine Korrektur der Bahn in Y-Richtung um den Wert 5 erforderlich macht, erhält man als neues Polynom der Y-Achse in Basiskoordinaten Y(u) →
Y(u) + 5:

$$Y(u) = (15.6 + 12.72^*(u - u_3) - 12.72^*(u - u_3)^2)/$$

$$(0.94 - 2^*0.54^*(u - u_3) + 1.09^*(u - u_3)^2).$$

Mit den rationalen Po0lynomen des Basiskoordinatensystems erfolgt die Interpolation der Bahnbewegung.
Wie bei Splines allgemein üblich, muß der Zusammenhang des Bahnparameters u mit der Bahnlänge s(u) durch numerische Integration bestimmt und invertiert werden, damit eine konstante Bahngeschwindigkeit resultiert. Danach
können an den durch den Interpolator vorgegebenen u-Werten die zugehörigen Achspositionen im Basiskoordinatensystem durch Berechnen der rationalen Polynome erhalten werden. In unserem Ausführungsbeispiel ergeben sich z.
B. bei u = 1.0 die Sollkoordinaten im Basiskoordinatensystem zu X(1) = 51.3 und Y(1) = 22.9.

In FIG 2 ist die resultierende Bahn des Ausführungsbeispiels mit und ohne Werkzeuglängenkorrektur dargestellt.

Falls die Maschinenachsen identisch sind mit den Achsen des Basiskoordinatensystems, werden entsprechende Signale direkt an die Antriebe ausgegeben, ansonsten müssen die Sollwerte des Basiskoordinatensystems in
die Positionen der Maschinenachsen transformiert werden. Beispielsweise könnte die Maschine statt der Y-Achse eine
Rundachse C haben. Dann muß das Signal für die Rundachsen in der Form C(u) = arctan (Y(u)/X(u)) erzeugt werden.
Im Ausführungsbeispiel ergibt sich C(1) = 24 Grad.

Auch hier sieht man wieder, wie wesentlich die Umsetzung des CAD-Programms in rationale Polynome innerhalb der numerischen Steuerung ist: Nur so kann die Steuerung ohne Neuerzeugung des Programms flexibel auf
die momentanen Gegebenenheiten bei der Fertigung reagieren.

**Patentansprüche**

1. Verfahren zur numerischen Bahnsteuerung von Werkzeugmaschinen oder Robotern, das eine durch mehrere Bewegungsachsen bestimmbare Relativbewegung zwischen Werkzeug und Werkstück ermöglicht, wobei die Bahn
   der Bewegung durch Interpolation zwischen vorgegebenen Bahnpunkten bestimmbar ist, **gekennzeichnet** durch
   die folgenden Verfahrensschritte:

   1.1 die Information über die zu generierende Bahn wird werkstückkoordinatensystembezogen einer Quelle
   (CAD/CAM) in Form von NURBS, also Nicht-Uniforme-Rationale-Basis-Splines, oder rationalen Polynomen
   entnommen,

   1.2 in der numerischen Steuerung (NC) werden diese NURBS in rationale Polynome gewandelt bzw. diese
   bereits vorliegenden rationalen Polynome direkt akzeptiert,

   1.3 diese gewandelten bzw. akzeptierten rationalen Polynome werden unter bedarfsweiser Berücksichtigung
   von Korrekturgrößen, insbesondere Werkzeugkorrekturen, analytisch in ein Basiskoordinatensystem transformiert, bei dem die Bahn daraufhin als Kurve in Form von transformierten Polynomen im Raum vorliegt,

   1.4 es erfolgt eine Interpolation dieser transformierten Polynome nach einem einheitlichen Interpolationsverfahren,

   1.5 das interpolierte Signal wird in das Maschinenkoordinatensystem transformiert und auf die einzelnen Maschinenachsen aufgeteilt und den zugeordneten Antrieben (A,B,C) zugeführt.

2. Verfahren nach Anspruch 1, **dadurch gekennzeichnet,** daß als Quelle ein CAD/CAM-System (CAD/CAM) verwendet wird.

3. Verfahren nach einem der vorstehenden Ansprüche, **dadurch gekennzeichnet,** daß das Werkstückkoordinatensystem und das Basiskoordinatensystem zusammenfallen.

4. Verfahren nach einem der vorstehenden Ansprüche, **dadurch gekennzeichnet,** daß das Basiskoordinatensystem
   und das Maschinenkoordinatensystem zusammenfallen.

5. Verfahren nach einem der vorstehenden Ansprüche, **dadurch gekennzeichnet,** daß die Interpolationsweite proportional der Geschwindigkeit längs der Bahn ist.

6. Verfahren nach einem der vorstehenden Ansprüche, **dadurch gekennzeichnet,** daß die Quelle (CAD/CAM) innerhalb der numerischen Steuerung (NC) angeordnet ist.

7. Verfahren nach einem der vorstehenden Ansprüche, **dadurch gekennzeichnet,** daß alle Verarbeitungsschritte weitestgehend in Echtzeit während der Bearbeitung des Werkstückes durchgeführt wird.

8. Verfahren nach einem der vorstehenden Ansprüche, **dadurch gekennzeichnet,** daß NURBS ersten, zweiten oder dritten Grades akzeptiert werden.

9. Vorrichtung zur numerischen Bahnsteuerung von Werkzeugmaschinen oder Robotern, die eine durch mehrere Bewegungsachsen bestimmbare Relativbewegung zwischen Werkzeug und Werkstück ermöglicht, wobei die Bahn der Bewegung durch Interpolation zwischen vorgegebenen Bahnpunkten bestimmbar ist, **gekennzeichnet** durch die folgenden Merkmale:

9.1 die Information über die zu generierende Bahn ist werkstückkoordinatensystembezogen einer Quelle (CAD/CAM) in Form von NURBS, also Nicht-Uniforme-Rationale-Basis-Splines, oder rationalen Polynomen entnehmbar,

9.2 in der numerischen Steuerung (NC) sind diese NURBS in rationale Polynome wandelbar bzw. diese bereits vorliegenden rationalen Polynome direkt akzeptierbar,

9.3 diese wandelbaren bzw. akzeptierbaren rationalen Polynome sind unter bedarfsweiser Berücksichtigung von Korrekturgrößen, insbesondere Werkzeugkorrekturen, analytisch in ein Basiskoordinatensystem transformierbar, bei dem die Bahn daraufhin als Kurve in Form von transformierten Polynomen im Raum vorliegt,

9.4 es ist in der numerischen Steuerung eine Einrichtung zur Interpolation dieser transformierten Polynome nach einem einheitlichen Interpolationsverfahren vorgesehen,

9.5 das interpolierte Signal ist in das Maschinenkoordinatensystem transformierbar und auf die einzelnen Maschinenachsen aufteilbar und den zugeordneten Antrieben zuführbar.

10. Vorrichtung nach Anspruch 9, **dadurch gekennzeichnet,** daß die Interpolationseinrichtung in den Kern der numerischen Steuerung integriert ist.

## Claims

1. A process for the numerical path control of machine tools or robots which facilitates a relative movement between tool and workpiece definable by a plurality of movement axes, wherein the path of the movement can be determined by interpolation between preset path points, characterised by the following process steps:

1.1 the information relating to the path to be generated is taken from a source (CAD/CAM), in a manner specific to the workpiece coordinate system, in the form of NURBs, thus non-uniform-rational-base splines, or rational polynomials,

1.2 in the numerical control system (NC) these NURBS are converted into rational polynomials or these already existing rational polynomials are directly accepted,

1.3 if necessary taking into account correction quantities, in particular tool corrections, these converted or accepted rational polynomials are analytically transformed into a base coordinate system in which the path then consists of a curve in the form of transformed polynomials in space,

1.4 an interpolation of these transformed polynomials in accordance with a standard interpolation method then takes place,

1.5 the interpolated signal is transformed into the machine coordinate system and is distributed between the individual machine axes and supplied to the associated drives (A, B, C).

2. A process according to Claim 1, characterised in that a CAD/CAM system (CAD/CAM) is used as source.

3. A process according to one of the preceding claims, characterised in that the workpiece coordinate system and the base coordinate system coincide.

4. A process according to one of the preceding claims, characterised in that the base coordinate system and the machine coordinate system coincide.

5. A process according to one of the preceding claims, characterised in that the interpolation width is proportional to the speed along the path.

6. A process according to one of the preceding claims, characterised in that the source (CAD, CAM) is arranged within the numerical control system (NC).

7. A process according to one of the preceding claims, characterised in that all the processing steps are performed substantially in real time during the machining of the workpiece.

8. A process according to one of the preceding claims, characterised in that NURBS of the first, second or third degree are accepted.

9. A device for the numerical path control of machine tools or robots which facilitates a relative movement between tool and workpiece definable by a plurality of movement axes, wherein the path of the movement can be determined by interpolation between preset path points, characterised by the following features:

9.1 the information relating to the path to be generated is taken from a source (CAD/CAM), in a manner specific to the workpiece coordinate system, in the form of NURBS, thus non-uniform-rational-base splines, or rational polynomials,

9.2 in the numerical control system (NC) these NURBS can be converted into rational polynomials or these already existing rational polynomials can be directly accepted,

9.3 if necessary taking into account correction quantities, in particular tool corrections, these convertible or acceptable rational polynomials can be analytically transformed into a base coordinate system in which the path then consists of a curve in the form of transformed polynomials in space,

9.4 a device for interpolating these transformed polynomials in accordance with a standard interpolation method is provided in the numerical control system,

9.5 the interpolated signal can be transformed into the machine coordinate system and can be distributed between the individual machine axes and supplied to the associated drives.

10. A device according to Claim 9, characterised in that the interpolator is integrated into the core of the numerical control system.

## Revendications

1. Procédé de commande numérique de trajectoire pour des machines-outils ou pour des robots, qui permet un mouvement relatif, pouvant être déterminé par plusieurs axes de mouvement, entre l'outil et la pièce, la trajectoire du mouvement pouvant être déterminée par interpolation entre des points de trajectoire prescrits, caractérisé par les étapes suivantes :

1.1 on extrait d'une source (CAD/CAM) l'information sur la trajectoire à produire, rapportée au système de coordonnées de la pièce, sous forme de NURBS, c'est-à-dire de fonction spline à base rationnelle non uniforme, ou sous forme de polynômes rationnels,

1.2 dans la commande numérique (NC), on transforme ces NURBS en polynômes rationnels ou on accepte directement ces polynômes rationnels déjà présents,

1.3 on transforme analytiquement ces polynômes rationnels transformés ou acceptés en tenant compte si nécessaire de grandeurs correctrices, notamment de corrections d'outil, dans un système de coordonnées de base selon lequel la trajectoire est ensuite présente dans l'espace comme une courbe sous forme de polynômes transformés,

1.4 on effectue une interpolation de ces polynômes transformés selon un procédé d'interpolation uniforme,

1.5 on transforme le signal interpolé dans le système de coordonnées de la machine, on le décompose selon les différents axes de la machine et on l'envoie aux dispositifs d'entraînement (A, B, C) associés.

2. Procédé selon la revendication 1, caractérisé par le fait que l'on utilise comme source un système CAD/CAM (CAD/CAM).

3. Procédé selon l'une des revendications précédentes, caractérisé par le fait que le système de coordonnées de la pièce et le système de coordonnées de base coïncident.

4. Procédé selon l'une des revendications précédentes, caractérisé par le fait que le système de coordonnées de base et le système de coordonnées de la machine coïncident.

5. Procédé selon l'une des revendications précédentes, caractérisé par le fait que la largeur d'interpolation est proportionnelle à la vitesse le long de la trajectoire.

6. Procédé selon l'une des revendications précédentes, caractérisé par le fait que la source (CAD/CAM) est agencée à l'intérieur de la commande numérique (NC).

7. Procédé selon l'une des revendications précédentes, caractérisé par le fait qu'on effectue toutes les étapes de traitement dans une très grande mesure en temps réel pendant l'usinage de la pièce.

8. Procédé selon l'une des revendications précédentes, caractérisé par le fait qu'on accepte des NURBS de premier, deuxième ou troisième degré.

9. Dispositif de commande numérique de trajectoire pour des machines-outils ou pour des robots, qui permet un mouvement relatif, pouvant être déterminé par plusieurs axes de mouvement, entre l'outil et la pièce, la trajectoire du mouvement pouvant être déterminée par interpolation entre des points de trajectoire prescrits, ayant les caractéristiques suivantes :

9.1 l'information sur la trajectoire à produire, rapportée au système de coordonnées de la pièce, est extraite d'une source (CAD/CAM) sous forme de NURBS, c'est-à-dire de fonction spline à base rationnelle non uniforme, ou sous forme de polynômes rationnels,

9.2 dans la commande numérique (NC), ces NURBS peuvent être transformées en polynômes rationnels ou ces polynômes rationnels déjà présents peuvent être acceptés directement,

9.3 ces polynômes rationnels transformables ou acceptables peuvent être transformés analytiquement en tenant compte si nécessaire de grandeurs correctrices, notamment de corrections d'outil, dans un système de coordonnées de base selon lequel la trajectoire est ensuite présente dans l'espace comme une courbe sous forme de polynômes transformés,

9.4 un dispositif est prévu dans la commande numérique en vue de l'interpolation de ces polynômes transformés selon un procédé d'interpolation uniforme,

9.5 le signal interpolé peut être transformé dans le système de coordonnées de la machine, être décomposé selon les différents axes de la machine et être envoyé aux dispositifs d'entraînement associés.

10. Dispositif selon la revendication 9, caractérisé par le fait que le dispositif d'interpolation est intégré au coeur de la commande numérique.

FIG 1

FIG 2